# EUROPEAN PATENT APPLICATION

(11) **EP 1 672 267 A2**
(43) Date of publication of application: **21.06.2006**
(21) Application number: 05291504.8
(22) Date of filing: 12.07.2005
(51) Int. Cl.: F16M 11/04

(54) **Refrigerator and display device guiding apparatus of the same**

(30) Priority: 14.12.2004 KR 2004105602
(71) Applicant: LG Electronics, Inc., Seoul (KR)
(72) Inventor: Kim, Yang Gyu, Seoul (KR); Lee, Youn Seok, 205-1303 Semteo Maeul 1 danji Apt., Goyang-si Gyeonggi-do (KR); Oh, Joon Hwan, Seoul (KR)
(74) Representative: Bentz, Jean-Paul

(57) **Abstract**

A display device guiding apparatus includes a receiving portion (320) formed on the door to define a predetermined space, links (120) each having a first end hinge-coupled to the receiving portion (320), arms (130) hinge-coupled to second ends of the links (120), and a pivot plate (140) hinge-coupled to the arms (130) to support a display device.

## Description

### BACKGROUND OF THE INVENTION

### Field of the Invention

The present invention relates to a refrigerator and an apparatus for guiding the displacement of a display device installed on a door of the refrigerator. More particularly, the present invention relates to a display device guiding apparatus of a refrigerator, which can prevent a display device mounted on the refrigerator from interfering with an outer wall and other components of the refrigerator by preventing the display device from being inclined in a direction when the display device pivots rightward and leftward, thereby allowing the display device to be smoothly projected frontward.

### Description of the Related Art

A refrigerator includes a main body, a refrigerating compartment for storing food under a refrigeration state and a freezing compartment for storing food under a freezing state. The refrigerating and freezing compartments are defined in the main body and selectively opened and closed by refrigerating and freezing doors, respectively. The refrigerator is designed to generate cool air using refrigerant going through a series of processes such as compression, condensation, expansion, and evaporation processes. The cool air is supplied to the refrigerating and freezing compartments to lower the temperature therein.

In recent years, in order to improve the user's convenience, a water purifying system or a display device has been installed on the door.

The user can identify the current state such as the temperature and humidity state of the refrigerator through the display device. When a large-sized display device is installed on the door, the user can enjoy a variety of services such as the Internet, TV and movie. Therefore, it will be more preferable for the user that a display device as large as possible is installed on the door.

Meanwhile, in order to install the display device on the door of the refrigerator, it is preferable that a flat display device such as a liquid crystal display (LCD) or a plasma display panel (PDP) that is relatively thin is used to prevent the insulation thickness of the door from being reduced. However, although the flat display device can solve the insulation thickness problem of the door, it may provide a dead angle at which the screen of the display device is hidden by, for example, a door handle and thus the user cannot see the image on the screen of the display device. Furthermore, since the flat display device such as the LCD and PDP has an inherent view angle problem, the user can clearly watch the image on the screen within a predetermined angle range.

To solve the above problem, Korean Patent Application No. 10-2000-0033709 discloses a structure for installing the display device on the refrigerator. The structure is designed to pivot the display device up and down.

However, since a display device receiving portion must be curved in response to the pivotal angle of the display device, a thickness of the door is affected as large as the radius of the curved portion. When the depth of the receiving portion is increased, the insulating efficiency of the refrigerator is deteriorated. Therefore, an additional insulating member must be further installed.

Furthermore, since the pivotal hinges are formed on left and right sides of the display device, the pivot direction of the display device is limited in a vertical direction. Therefore, the view angle problem in the left and right directions and the dead angle problem caused by the door handle cannot be still solved.

### SUMMARY OF THE INVENTION

Accordingly, the present invention is directed to a refrigerator and a display device guiding apparatus of the refrigerator that substantially obviate one or more problems due to limitations and disadvantages of the related art.

An object of the present invention is to provide a refrigerator and a display device guiding apparatus of the refrigerator that can minimize a depth of a display device receiving portion and reduce the insulation loss of a refrigerator door.

Another object of the present invention is to provide a refrigerator and a display device guiding apparatus of the refrigerator that can solve the view angle problem of a display device in the left and right directions.

A further another object of the present invention is to provide a refrigerator and a display device guiding apparatus of the refrigerator that can solve a dead angle problem caused by, for example, a door handle.

A still further another object of the present invention to provide a display device guiding apparatus of a refrigerator, which can prevent a display device mounted on the refrigerator from interfering with an outer wall of the refrigerator and other components such as a door handle of the refrigerator by improving the straight running out property of the display device, thereby allowing the user to conveniently use the display device.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a display device guiding apparatus, including: a receiving portion formed on the door to define a predetermined space; links each having a first end hinge-coupled to the receiving portion; arms hinge-coupled to second ends of the links; and a pivot plate hinge-coupled to the arms to support a display device.

According to another aspect of the present invention, there is provided a refrigerator, including: a door; a receiving portion depressed on a front surface of the door by a predetermined depth; a fixing plate provided on an inner surface of the receiving portion; a display device receivable in the receiving portion; and a guide unit connecting the fixing plate to the display device, wherein the guide unit comprises: links symmetrically disposed and each having a first end hinge-coupled to the fixing plate; arms hinge-coupled to second ends of the links; and a pivot plate hinge-coupled to the arms to support the display device.

According to a further another aspect of the present invention, there is provided a display device guiding apparatus, including: a receiving portion provided on a depressed space of a door; a fixing plate fixed on an inner surface of the receiving portion; links each having a first end hinge-coupled to the fixing plate; arms hinge-coupled to second ends of the links; and a guide rail formed on the fixing plate to guide the movement of the arms while contacting the arms; and a pivot plate hinge-coupled to the arms to support a display device.

According to still yet another aspect of the present invention, there is provided a display device guiding apparatus, including: a receiving portion providing a predetermined space; links symmetrically and pivotally moving with respect to the receiving portions; arms pivotally moving with respect to the links; and a pivot plate hinge-coupled to the arms to support the display device.

According to the present invention, the user can more conveniently and safely use the display device. In addition, the insulating loss caused by the installation of the display device can be reduced.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view of a refrigerator according to an embodiment of the present invention;

FIG. 2 is an exploded perspective view of a guide unit according to one embodiment of the present invention;

FIG. 3 is a view illustrating a state where a display device is received in a receiving portion by a display device guiding apparatus according to an embodiment of the present invention;

FIG. 4 is a view illustrating a state where a display device is being projected frontward of a receiving portion by a display device guiding apparatus according to a first embodiment of the present invention;

FIG. 5 is a view illustrating a state where a display device is being projected frontward of a receiving portion and pivoted in a horizontal direction by a display device guiding apparatus according to an embodiment of the present invention;

FIG. 6 is a vertical sectional view of a display device guiding apparatus according to a second embodiment of the present invention; and

FIG. 7 is a horizontal sectional view of a display device guiding apparatus according to a third embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

**First Embodiment**

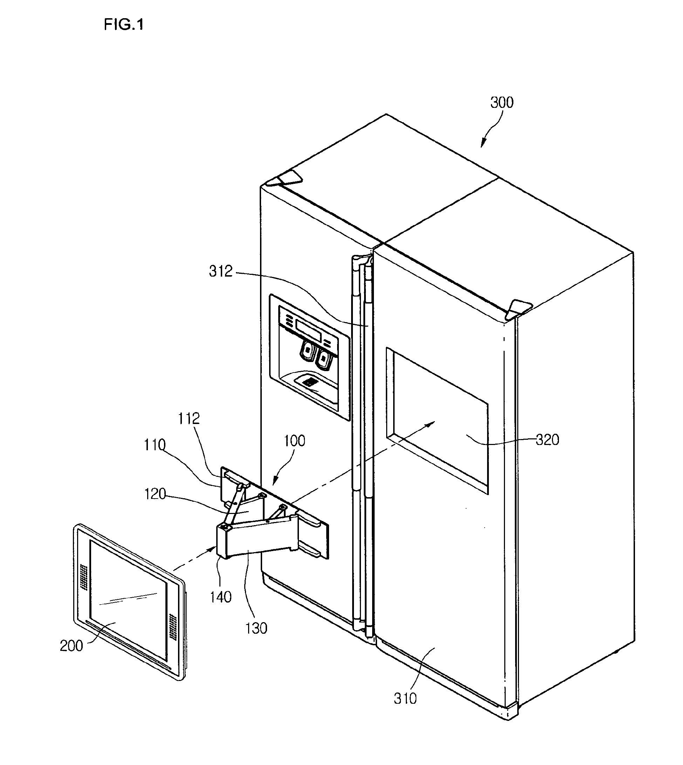

FIG. 1 shows a perspective view of a refrigerator according to an embodiment of the present invention.

Referring to FIG. 1, a refrigerator includes a main body 300 defining a low-temperature space, a door 310 selectively opening/closing a front portion of the main body 300, a door handle 312 provided on a portion of the door 310, a receiving portion 320 depressed on a front portion of the door 310, a display device 200 installed in the receiving portion 320, and a guide unit 100 for projecting the display device 200 frontward.

The display device 200 is designed to be projected frontward or received in the receiving portion 320 by the guide unit 100. The display device may be of a flat panel display device such as an LCD and a PDP.

The guide unit 100 includes a fixing plate installed on the door 310, a pair of links 120 each having a first end hinge-coupled to the fixing plate 110, a pair of arms hinge-coupled to respective second ends of the links 120, a pivot plate 140 on which the display device 200 is fixed, the pivot plate 140 being hinge-coupled to the arms 130.

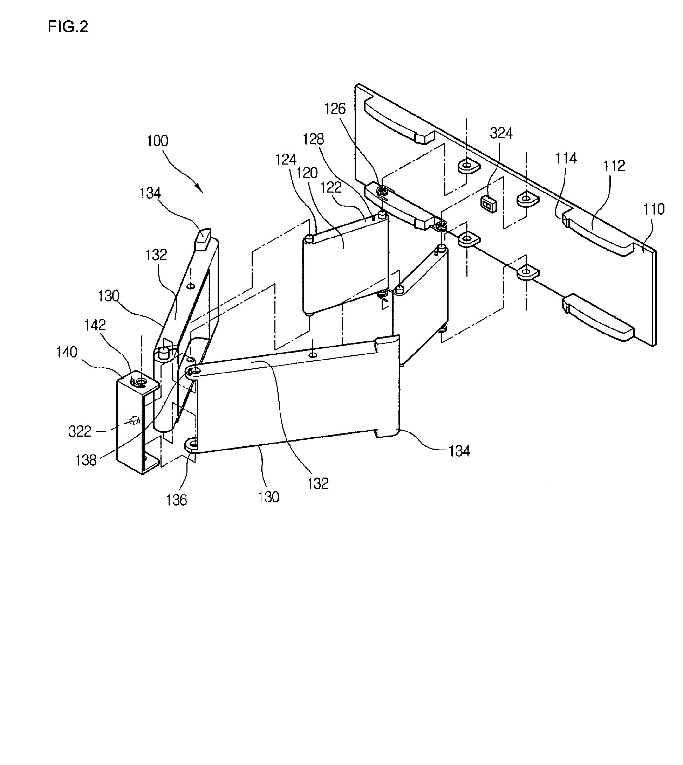

The guide unit 100 will be described in more detail with reference to FIG. 2.

The fixing plate 110 is installed on the door 310 of the main body 300. The receiving portion 320 is formed on the door 310. The fixing plate 110 is fixed in the receiving portion 320 such that a rear surface of the fixing plate 110 closely contacts the inner surface of the receiving portion 320. The receiving portion is designed having a predetermined depth inward of the door 310 so as for the guide unit 100 and the display device 200 that are received in the receiving portion not to projected frontward.

Upper guide rails 112 are formed on a front upper end of the fixing plate 110 and lower guide rails 112 are formed on a front lower end of the fixing plate 110. In order to provide the straight advancement to the display device 200 when the display device is projected frontward, the guide rails 112 are formed corresponding to a moving trace of moving ends 134 formed on the arms 130. In addition, in order for the moving ends to be smoothly guided by the guide rails 112, outward portions of the guide rails 112 are gently curved. Furthermore, in order to prevent the moving ends 134 from being derailed from the guide rails 112, a stopper 114 is formed on an inward portion of each guide rail 112. The gentle curves of the guide rail 112 are formed in response to the moving location of the arms 130 pushed by the links 120.

In addition, the links 120 are installed on the fixing plate 110 fitted in the receiving portion 320. The links 120 are symmetrically installed with reference to a front center line of the fixing plate 110. The first ends 122 of the links 120 are pivotally coupled to the fixing plate 110.

Torsion spring 126 is provided on the respective first ends 122 of the links 120 to provide elastic force when the links 120 are coupled to the fixing plate 110. Opposite ends of the torsion spring 126 are respectively supported on the fixing plate 110 and a projection 128 while being supporting on a hinge shaft of the corresponding link 120. Accordingly, the torsion springs 126 provide biasing force pivoting the links 120 frontward.

The second ends 124 of the links 120 are hinge-coupled to the arms 130 so as to guide the arms 130. Each of the arms 130 is formed of a plate having upper and lower bent ends. That is, the second ends 124 of the links 120 are hinge-coupled to bent portions 132 formed on the arms 130. As described above, when the arms 130 hinge-coupled to the second ends of the links 120 approach the fixing plate 110, the arms 130 are designed to be located between the upper and lower guide rails 112.

Each of the arms 130 is provided at an outer portion with reference to a hinge point connected to the second end of the link 120 with the moving end 134 moving along the guide rail 120 and at an inner portion with a fixing end 136 hinge-coupled to the pivot plate 140.
That is, the moving end 134 is formed to be more protruded outward than the guide rail 112. When the arms 130 is projected frontward by the links 120, since the moving ends 134 are guided while contacting the corresponding guide rails 112, the moving ends 134 are advanced side by side. Thus, when the display device 200 is projected frontward of the door 310, the straight advancement of the display device 200 fixed on the pivot plate 140 is further improved. When the display device 200 is straightly advanced frontward, the display device 200 can be safely projected frontward without colliding with the door handle 312. The fixing ends 136 of the arms 130 are hinge-coupled to the pivot plate 140 so that the pivot plate 140 can pivot within a predetermined angle range in a horizontal direction. To limit the pivot angle to a predetermined amount, slots 142 are asymmetrically formed with reference to a hinge point of the pivot plate 140. The arms 130 are provided with stoppers 136 inserted in the corresponding slots 142. Since the fixing end 136 are provided on one of the arms 130 while the projections for guiding the fixing ends 136 are provided on the other of the arms 130, the pair of arms 130 pivots around a common axis.

The slots 142 and the stoppers 138 are provided to prevent the display device 200 from colliding with the door handle 312 formed on the door 310. That is, the slots 142 are asymmetrically formed with reference to the hinge point so that the display device 200 pivots within the predetermined angle range in a direction opposite to a direction in which the door handle 312 is formed.

Meanwhile, a back cover of the display device 200 is fixedly supported on the front surface of the pivot plate 140. A hook 322 is installed on a rear surface of the pivot plate 140 and a catcher 324 is provided on a portion of the fixing plate 110, which corresponds to the hook 140. The combination of the hook 322 and the catcher 324 constitutes a push button switch. The hooking state between the hook 322 and the catcher 324 are varied in accordance with the pushing number of the hook 322. That is, when the hook is pushed in a state where the hook 322 and the catcher 324 are locked, the hook 322 is released from the catcher 322. When the hook is pushed in a state where the hook 322 is released from the catcher 324, the pushed button switch 322 is interlocked with the catcher 322.

The operation of the above-described display device guiding apparatus of the refrigerator will be described hereinafter.

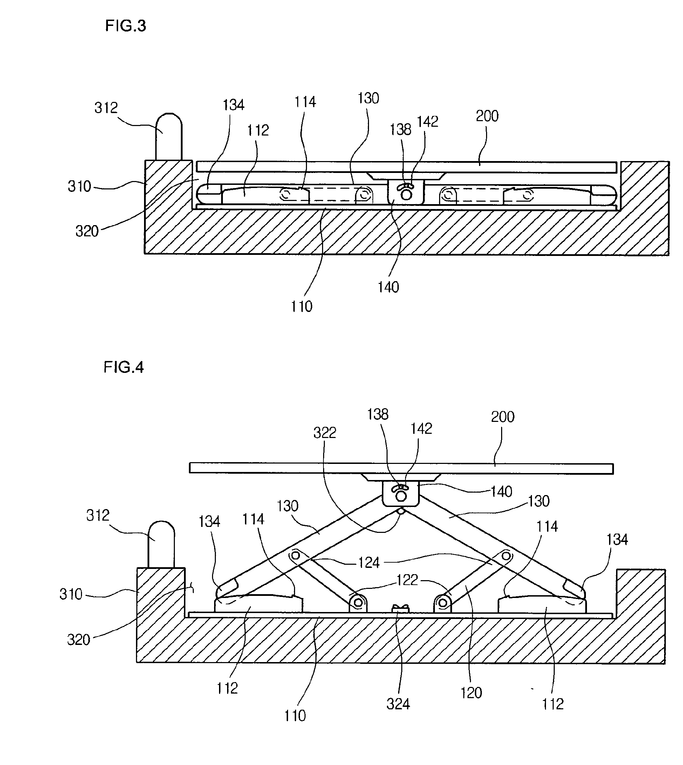

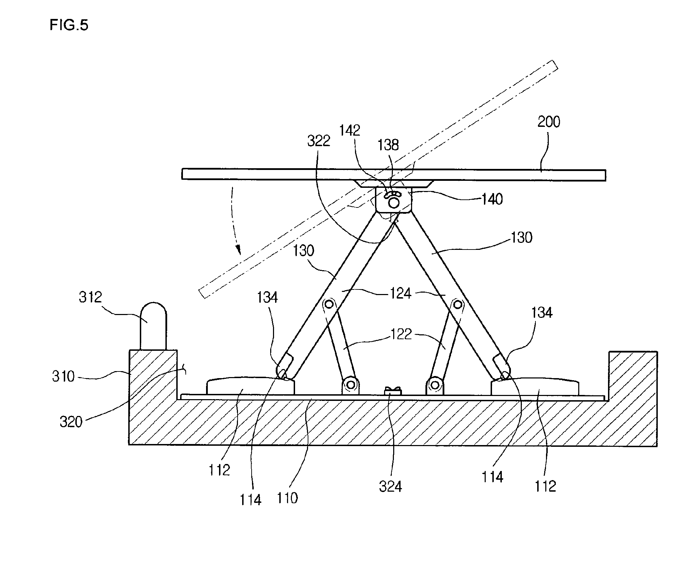

FIG. 3 illustrates a state where the display device is received in the receiving portion, FIG. 4 illustrates a state where the display device is being projected frontward of the receiving portion, and FIG. 5 illustrates a state where the display device is being projected frontward of the receiving portion and pivoted in a horizontal direction.

In an initial state, the guide unit 100 and the display device 200 are received in the receiving portion 320.

At this point, the arms 130 and the links 120 is in contact with each other and the hook 322 installed on the rear surface of the pivot plate 140 is interlocked with the catcher 324 installed on the front surface of the fixing plate, thereby stably supporting the display device 200.

When the user watches the screen of the display device in the initial state and feels that the image is not clear, the user pushes the hook 322 toward the door so that the hook 322 is released from the catcher 324. Since the structure of the push button switch structure is well known in the art, the detailed description thereof will be omitted herein.

When the hook 322 is released from the catcher 324, the torsion springs 126 interposed between the links 120 and the fixing plate 110 bias the links 120 such that the second ends 124 of the links 120 pivot frontward of the door 310.

As a result, the moving ends 134 of the arms hinge-coupled to the second ends 124 of the links 120 are guided by the guide rails 112 formed on the fixing plate 110 to move inwardly. At this point, since the arms 130 are symmetrically disposed with reference to the supporting point of the pivot plate 140, the moving ends 134 are designed to advance side by side at an identical distance and angle.

When the moving ends 134 moves inwardly of the fixing plate 110, the fixing ends 136 of the arms 130 are projected frontward of the door 310. When the moving ends 134 moves inwardly of the guide rails 112 by a predetermined distance, the moving ends 134 is caught by the stoppers 114 such that the moving ends 134 cannot further move inward of the guide rails 112. Meanwhile, the guide rails are curved at a predetermined curvature. Therefore, when the arms 130 are advanced by the links 120, since the curvature of the guide rails 112 is identical to the moving trace of the moving ends 134, the movement of the moving ends 134 can be smoothly realized. Since the stoppers 114 is projected out of the moving trace of the moving ends 134, the moving ends 134 can be caught by the stoppers 114.

When the fixing ends 136 of the arms 130 are projected frontward of the door 310, the pivot plate 140 hinge-coupled to the fixing ends 136 are also projected frontward of the door 310, thereby projecting the display device fixed on the pivot plate 140 frontward. When the display device is projected frontward, the user can watch the image on the screen of the display device clearly.

Hear, since the links 120, the guide rails 112 and arms 130 are all symmetrically installed with reference to the fixing plate 110, the display device 200 can be accurately projected frontward without being inclined in any directions.

After the display device 200 is projected frontward, by pivoting the pivot plate 140 fixed on the fixing ends 136 of the arms 130 leftward or rightward, the view angle problem and the dead angle problem can be solved. At this point, the slots 142 formed on the pivot plate 140 restrict the excessive pivot motion of the display device 200, thereby preventing the display device 200 from colliding with the door handle 312 or other components. That is, since the stoppers 138 can move only in the slots 142 and the slots 142 are not formed up to a location where the door handle is formed, the collision between the display device and the door handle can be prevented.

In order to return the projected display device to the initial received state in the receiving portion 320, the user pushes the projected display device 200 toward the fixing plate 110. Then, the pivot plate 140 closely contacts the fixing plate 110 and the links 120 are overlapped with the bent portions 132 of the arms 130. Then, the moving ends 134 of the arms 130 moves outward of the guide rails 134, thereby receiving the display device 200 in the receiving portion 320. In spite that the depth of the receiving portion 320 is shallow, since the arms 130 and the links 120 can be received in the receiving portion 320, the insulation efficiency of the door 310 is not deteriorated.

In addition, the hook 322 and the catcher 324 are interlocked again with each other to maintain the initial state.

The push button switch defined by the hook 322 and the catcher 324 are provided to prevent the display device 200 from inadvertently projected out of the receiving portion 320. However, the push button switch of the present invention is not limited to the combination of the hook and catcher. That is, other structures such as a hooking unit using attraction force of magnets may be employed.

**Second Embodiment**

This embodiment of the present invention is identical to the first embodiment except that the display device 200 is designed to further pivot in a vertical direction. That is, in the first embodiment, since the display device 200 is designed to pivot only in the horizontal direction, the view angle can be adjusted only in the horizontal direction. However, since the user may want to adjust the view angle of the display device in the vertical direction to more clearly see the images on the display device. Therefore, it will be more preferable that the view angle of the display device can be adjusted in the vertical direction as well as the horizontal direction without interfering with other components.

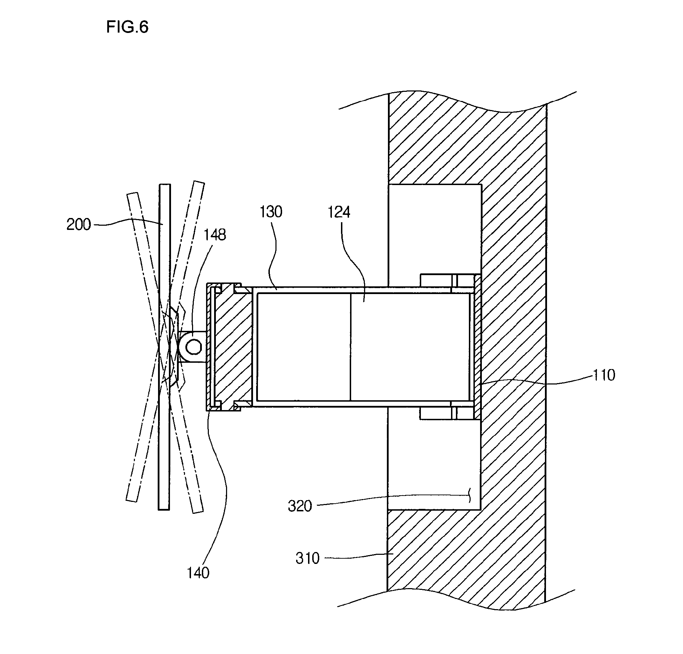

FIG. 6 is a vertical sectional view of a display device guiding apparatus according to a second embodiment of the present invention.

Referring to FIG. 6, a vertical hinge 148 is further provided between the pivot plate 140 and the display device 200 to pivot the display device in the vertical direction. In addition, in order to prevent the display device from colliding with the door 310, the vertical hinge 148 is provided with slots 142 and projections 138 that are identical in a structure to those described in first embodiment to limit the pivotal motion of the display device 200 within a predetermined angle range. A phantom line in the drawing shows a pivoting state of the display device 200 in the vertical direction.

**Third Embodiment**

This embodiment is identical to the first embodiment except that no fixing plate 110 is provided. The identical parts to those of the first embodiment will not be described herein. Only the feature of this embodiment will be described hereinafter.

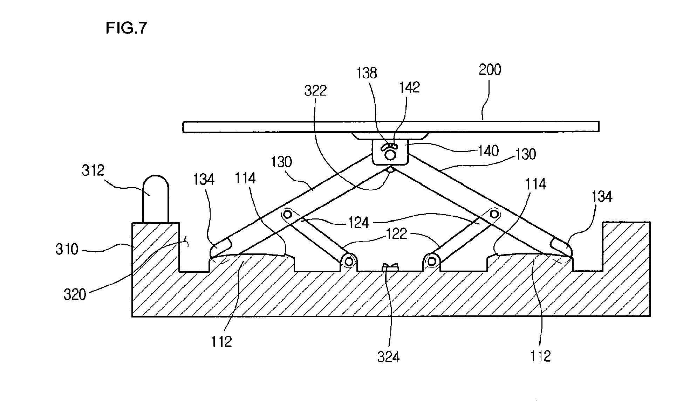

FIG. 7 is a horizontal sectional view of a display device guiding apparatus according to a third embodiment of the present invention.

Referring to FIG. 7, in a state where the fixing plate 110 disclosed in the first and second embodiments is not provided, the guide unit 100 is designed such that the guide rails 112 are directly formed on the receiving portion 320 and the first ends 122 of the links 120 are directly hinge-coupled to the receiving portion 320. As a result, the guide unit 100 can be directly installed on the receiving portion 320 without using the fixing plate 110. In this case, the depth of the receiving portion 320 can be reduced by a thickness of the fixing plate.

Therefore, the insulation efficiency of the door 310 can be further improved.

According to the present invention, since the display device is designed to pivot in vertical and horizontal directions, the user can clearly watch the images on the display device regardless of his/her location.

Furthermore, since the links and the arms are all symmetrically installed, the straight advancement can be improved, thereby solving the collision problem of the display device with the door handle or other components/

In addition, in spite that the depth of the receiving portion can be reduced, since the guide unit can be snuggly installed in the receiving portion, the insulation efficiency of the refrigerator can be improved.

It will be apparent to those skilled in the art that various modifications and variations can be made in the present invention. Thus, it is intended that the present invention covers the modifications and variations of this invention provided they come within the scope of the appended claims and their equivalents.

## Claims

1. A display device guiding apparatus comprising:
a receiving portion formed on the door to define a predetermined space;
links each having a first end hinge-coupled to the receiving portion;
arms hinge-coupled to second ends of the links; and
a pivot plate hinge-coupled to the arms to support a display device.

2. The display device guiding apparatus according to claim 1, wherein the arms and the links are hinge-coupled at a center of the arms.

3. The display device guiding apparatus according to claim 1 or 2, wherein the pair of arms are hinge-coupled at a location identical to the pivot plate.

4. The display device guiding apparatus according to any one of claims 1 to 3, further comprising a spring biasing the links away from the receiving portion.

5. The display device guiding apparatus according to any one of claims 1 to 4, wherein the links are received in and overlapped with the arms.

6. The display device guiding apparatus according to any one of claims 1 to 5, further comprising a vertical hinge provided on a front portion of the pivot plate.

7. The display device guiding apparatus according to any one of claims 1 to 6, further comprising a push button switch selectively fixing the pivot plate on the receiving portion.

8. The display device guiding apparatus according to any one of claims 1 to 7, further comprising a hook portion provided on a contacting portion between the arms and the pivot plate to limit a pivot angle of the pivot plate.

9. The display device guiding apparatus according to any one of claims 1 to 8, further comprising a fixing plate for fixing the links to the receiving portion.

10. The display device guiding apparatus according to any one of claims 1 to 9, further comprising a guide rail fixed on the receiving portion, the arm being provided a moving end contacting the guide rail.

11. The display device guiding apparatus according to claims 10, wherein the moving end is provided on upper and lower ends of the arm.

12. The display device guiding apparatus according to claim 10 or 11, wherein the guide rail is shaped to correspond to a moving trace of the moving end.

13. The display device guiding apparatus according to any one of claims 10 to 12, wherein the guide rail is provided at an end with a stopper limiting the movement of the moving end.

14. A refrigerator comprising:
a door;
a receiving portion depressed on a front surface of the door by a predetermined depth;
a fixing plate provided on an inner surface of the receiving portion;
a display device receivable in the receiving portion;
and
a guide unit connecting the fixing plate to the display device,
wherein the guide unit comprises:
links symmetrically disposed and each having a first end hinge-coupled to the fixing plate;
arms hinge-coupled to second ends of the links; and
a pivot plate hinge-coupled to the arms to support the display device.
